# EUROPÄISCHE PATENTSCHRIFT

(11) **EP 0 588 171 B1**
(45) Veröffentlichungstag und Bekanntmachung des Hinweises auf die Patenterteilung: **12.02.1997**
(21) Anmeldenummer: 93114061.0
(22) Anmeldetag: 02.09.1993
(51) Int. Cl.: C04B 35/58, C01B 21/072

(54) **Verfahren zur Aufbereitung von wasserempfindlichen Keramischen Pulvern zu einem rieselfähigen granulierten Pulver**
Process for the transformation of water - sensitive ceramic powders into a flowable granulate
Procédé de transformation de poudres céramiques sensibles à l'eau en une poudre granulée apte à l'écoulement

(30) Priorität: 08.09.1992 DE 4230016
(43) Veröffentlichungstag der Anmeldung: 23.03.1994
(73) Patentinhaber: HOECHST AKTIENGESELLSCHAFT, 65929 Frankfurt am Main (DE)
(72) Erfinder: Seitz, Katharina, Dr., D-60596 Frankfurt am Main (DE); Güther, Hans-Michael, D-65779 Kelkheim/Taunus (DE); Hessel, Friedrich, Dr., D-55124 Mainz (DE); Schröder, Frank, Dr., D-50354 Hürth (DE); Köstler, Christine, Dr., D-65812 Bad Soden/Taunus (DE); Roosen, Andreas, Dr., D-65719 Hofheim (Taunus) (DE); May, Christian, D-50374 Erftstadt (DE)

(56) Entgegenhaltungen:
- EP-A- 0 424 094
- DE-A- 4 119 695
- CHEMICAL ABSTRACTS, vol. 111, no. 6, 7. August 1989, Columbus, Ohio, US; abstract no. 44266f, NAKAMURA YOSHUKI & AL. 'Free-flowing granulated aluminum nitride powder for press molding' Seite 313 ; & JP-A-1 061 632
- DATABASE WPI Section Ch, Week 8928, Derwent Publications Ltd., London, GB; Class A81, AN 89-203080 & JP-A-1 141 865
- DATABASE WPI Section Ch, Week 8916, Derwent Publications Ltd., London, GB; Class E33, AN 89-117143 & JP-A-1 061 304
- CHEMICAL ABSTRACTS, vol. 108, no. 8, 22. Februar 1988, Columbus, Ohio, US; abstract no. 61239e, UNO NAOKI & AL. 'Surface treatment of aluminum nitride powder for improvement of water-repellency and -dispersibility' Seite 323 ; & JP-A-62 207 770
- PATENT ABSTRACTS OF JAPAN vol. 013, no. 021 (C-560)18. Januar 1989 & JP-A-63 225 507
- DATABASE INSPEC INSTITUTE OF ELECTRICAL ENGINEERS, STEVENAGE, GB Inspec No. 4014683 EGASHIRA M ET AL 'Chemical surface treatments of aluminium nitride powder suppressing its reactivity with water'

## Beschreibung

Die vorliegende Erfindung betrifft ein Verfahren zur Aufbereitung von wasserempfindlichen keramischen Pulvern zu einem rieselfähigen granulierten Pulver, bei dem das wasserempfindliche keramische Pulver mit einer hydrophoben Beschichtung versehen wird. Insbesondere betrifft die Erfindung ein Verfahren zur Aufbereitung von Aluminiumnitrid-Pulver.

Bei der Herstellung von Formkörpern aus technischer Keramik wird das keramische Pulver zunächst aufbereitet, bevor es zum Grünkörper geformt und der Grünkörper gesintert wird.

Bei feinen Pulvern tritt durch Oberflächenkräfte und ggf. feste Brücken infolge chemischer Bindung eine Agglomeration auf, die eine Verarbeitung zum Grünkörper erschwert oder unmöglich macht, da das agglomerierte Pulver nicht rieselfähig ist, und die zu Inhomogenitäten in der Mikrostruktur der gesinterten Keramik führt. Daher erfordert jedes Herstellungsverfahren von Keramik-Formkörpern eine spezielle Pulveraufbereitung, in der das Pulver deagglomeriert wird. Anschließend kann eine gezielte Agglomeration bei der Pulveraufbereitung erfolgen, um ein rieselfähiges granuliertes Pulver mit einer gewünschten Spezifikation zu erhalten. Rieselfähige granulierte Pulver werden z.B. verwendet, wenn die Formgebung zum Grünkörper durch Pressen erfolgt.

Wird der Grünkörper durch druckloses Flüssigphasensintern verdichtet, dient die Aufbereitung des Pulvers auch dazu, ein Sinterhilfsmittel homogen in dem keramischen Pulver zu verteilen.

Eine Möglichkeit der Pulveraufbereitung umfaßt ein Naßmahlen in Wasser mit anschließender Sprühtrocknung zu einem rieselfähigen granulierten Pulver. Bei wasserempfindlichen keramischen Pulvern kann diese Aufbereitung zu unerwünschten Veränderungen des Pulvers führen. Z.B. ist Aluminiumnitrid-Pulver hydrolyseempfindlich. Extrem hydrolyseempfindlich ist Aluminiumnitrid-Pulver, das direkt aus den Elementen hergestellt wird. Aber auch das nach dem carbothermischen Verfahren hergestellte Aluminumnitrid-Pulver unterliegt bei längerem Kontakt mit Wasser der Hydrolyse. Die Hydrolyse hat zur Folge, daß die Wärmeleitfähigkeit der Aluminiumnitrid-Keramik wesentlich verschlechtert wird. Da Aluminiumnitrid-Keramik wegen ihrer sehr guten Wärmeleitfähigkeit zunehmend in der Elektronik Anwendung findet, z.B. als Substratwerkstoff in der Mikroelektronik, muß beim Herstellungsverfahren der Formkörper aus Aluminiumnitrid-Pulver eine Hydrolyse verhindert werden.

Eine Möglichkeit, Hydrolyse von Aluminiumnitrid-Pulver bei der Aufbereitung zu verhindern, besteht darin,organische Dispersionsmittel zur Aufbereitung des Pulvers zu verwenden. Organische Dispersionsmittel haben aber den Nachteil, daß sie gesundheitsschädlich und/oder umweltschädlich sind oder mit Luft explosive Gemische bilden.

Eine andere Möglichkeit sieht eine Beschichtung des Aluminiumnitrid-Pulvers vor, um einen direkten Kontakt von Pulver und Wasser während der Aufbereitung des Pulvers zu vermeiden. Das z.B. mit Polymeren oder Fettsäuren beschichtete Pulver läßt sich dann aber nicht oder nur schwer in Wasser dispergieren. Andere Beschichtungen können Probleme beim Ausbrennen oder Sintern ergeben, wenn größere Mengen dieser Fremdstoffe entfernt werden müssen.

Die Anwendung der Sprühtrocknung bei der Herstellung granulierten Pulvers ermöglicht eine enge Granulatgrößenverteilung, die wiederum einen höheren Verdichtungsgradienten und eine größere Dimensionsgenauigkeit bei der anschließenden Herstellung der Formkörper ermöglicht. Daher ist es in vielen Fällen wünschenswert, bei der Aufbereitung die Sprühtrocknung anzuwenden.

JP-A-1 061 362 beschreibt die Passivierung von AlN-Pulvern mit einer grenzflächenaktiven Verbindung, z.B. Stearinsäure, und die Zersetzung und Stabilisierung dieser Verbindung, damit die beschichteten AlN-Pulver beim nachfolgenden Sprühtrocknen wasserunempfindlich sind; der Suspension, die für das Sprühtrocknen benötigt wird, wird kein Tensid zugegeben. M. Egashira et al., J. Mater. Sci. Letters **10**, 1991, 994-996, lehrt die Beschichtung von AlN-Pulvern z.B. mit Stearinsäure in Benzol, den Test auf Hydrophobizität mit Wasser-Ethanol-Gemischen und die Zugabe von 2 Vol.-% Poly(oxyethylenalkylether) zu einer wässerigen Dispersion, die dieses beschichtete AlN-Pulver enthält. JP-A-1 141 865 und DE-A-4119 695 nennen bestimmte Tenside, die einem Gemisch mit einem unbeschichteten keramischen Pulver, Binder und organischen Lösungsmittel zugesetzt werden.

Aufgabe der vorliegenden Erfindung ist die Bereitstellung eines Verfahrens der eingangs genannten Art, bei dem das mit einer hydrophoben Beschichtung versehene Pulver in Wasser dispergiert und durch Sprühtrocknung in ein rieselfähiges Granulat überführt werden kann. Insbesondere soll eine Aufbereitung von Aluminiumnitrid-Pulver geschaffen werden, bei der sowohl eine Hydrolyse verhindert als auch in wäßrigem Medium gearbeitet werden kann.

Ausgehend von dem eingangs genannten Verfahren wird diese Aufgabe dadurch gelöst, daß das mit einer hydrophoben Beschichtung versehene Pulver in Wasser unter Zusatz eines nichtionischen Tensids aus der Gruppe der Alkylphenolpolyglykolether oder Fettsäurepolyglykolester mit einem HLB-Wert von 10 bis 14 in einer für eine monomolekulare Belegung des Pulvers ausreichenden Menge zusammen mit einem Binder dispergiert wird und durch Sprühtrocknung in ein rieselfähiges granuliertes Pulver überführt wird.

Durch das erfindungsgemäße Verfahren ist es möglich, die durch eine hydrophobe Beschichtung stabilisierten keramischen Pulver in Wasser gut zu dispergieren. Es läßt sich ein stabiler wäßriger Schlicker herstellen, der durch Sprühtrocknung in ein rieselfähiges granuliertes Pulver mit einer gewünschten mittleren Granulatgröße im Bereich von 20 bis 500 µm, insbesondere 50 bis 250 µm, und mit einer engen Granulatgrößenverteilung und guten Lagerfähigkeit überführt werden kann. Die erfindungsgemäß zugesetzten Tenside haben nicht nur eine gute Dispergierwirkung, sondern zeichnen sich auch durch eine geringe Neigung zur Schaumbildung aus.

Das erfindungsgemäße Verfahren ist insbesondere für nichtoxidische keramische Pulver und vorzugsweise für Aluminiumnitrid-Pulver geeignet. Nach dem erfindungsgemäßen Verfahren kann sowohl nach dem carbothermischen Verfahren als auch direkt aus den Elementen hergestelltes Aluminiumnitrid-Pulver verarbeitet werden.

Das mit dem erfindungsgemäßen Verfahren hergestellte granulierte Pulver kann nach üblichen Verfahren durch Trockenpressen zu einem Grünkörper gepreßt werden, der durch anschließendes Sintern,z.B. unter Stickstoffatmosphäre bei ca. 1850°C, zu dem Keramik-Formkörper verdichtet wird.Die erfindungsgemäße Aufbereitung liefert granulierte Pulver, mit denen sich Grün- und Sinterkörper mit minimaler Verunreinigung herstellen lassen. Im Fall von Aluminiumnitrid erhält man Formkörper mit einer hohen Wärmeleitfähigkeit von über 150 W/mK.

Sofern dem keramischen Pulver ein Sinterhilfsmittel zugesetzt wird, wird es bevorzugt zusammen mit dem keramischen Pulver mit einer hydrophoben Beschichtung versehen. Als Sinterhilfsmittel kommen z.B. Oxide der Seltenerdmetalle in Frage, insbesondere Yttriumoxid (Y₂O₃).

Das keramische Pulver und ggf. das Sinterhilfsmittel kann mit Polymeren durch in-situ Polymerisation oder durch Beschichtung aus organischer Lösung beschichtet werden. Bevorzugt wird beim erfindungsgemäßen Verfahren das keramische Pulver mit Fettsäuren, deren Salzen oder Derivaten, z.B. Amine, beschichtet. Dafür kommen Fettsäuren mit 10 bis 26 Kohlenstoffatomen in Frage, wobei die Fettsäuren gesättigt oder ungesättigt, linear oder verzweigt sein können. Fettsäuren mit 14 bis 20 Kohlenstoffatomen oder deren Salze und Derivate sind bevorzugt, insbesondere Stearin- und Palmitinsäure. Sie werden in einem organischen Lösungsmittel, z.B. Isopropanol, Toluol, n-Hexan gelöst und aus dieser Lösung auf das keramische Pulver aufgebracht. Die Mischung wird gut homogenisiert, und anschließend wird das Lösungsmittel entfernt.

Die üblicherweise verwendeten keramischen Pulver haben eine spezifische Oberfläche von 1 bis 10 m²/g und Teilchengrößen von 0,5 bis 5 µm, insbesondere 1,0 bis 2,0 µm. Die oben genannten Materialien zur Bildung der hydrophoben Beschichtung werden in einer Menge eingesetzt,die ausreicht, die Oberfläche des keramischen Pulvers und ggf. des Sinterhilfsmittels zu beschichten. In Abhängigkeit vor der spezifischen Oberfläche des verwendeten keramischen Pulvers werden die Materialien in Mengen zwischen 0,5 und 5 Gew.-%, bezogen auf das keramische Pulver bzw. auf die Mischung aus keramischen Pulver und Sinterhilfsmittel eingesetzt.

Das mit der hydrophoben Beschichtung versehene Pulver wird dann in Wasser mit Hilfe bestimmter Tenside zusammen mit einem Binder und ggf. Preßhilfsmitteln dispergiert.

Die nichtionischen Tenside aus der Gruppe der Ethylenoxidaddukte sind Alkylphenolpolyglykolether, Fettalkoholpolyglykolether und Fettsäurepolyglykolester.

Die Tenside müssen einen HLB-Wert von 10 bis 14 haben. Der HLB-Wert ist das Maß für die Wasser- bzw. Öl-Löslichkeit des nichtionischen Tensids. Er wird nach der in der Literaturstelle R. Heusch, Kolloid-Zeitschrift, Bd. 236, Seite 31 ff (1970) für nichtionische Tenside angegebenen Methode bestimmt. Bevorzugt sind nichtionische Tenside mit einem HLB-Wert von 12 bis 13.

Die Tenside werden in einer Menge eingesetzt, die ausreicht, um eine monomolekulare Belegung des hydrophob beschichteten Pulvers zu ergeben. Je höher die spezifische Oberfläche des Pulvers ist, desto größer muß die Menge des Tensids sein. Die Menge des zugesetzten Tensids sollte nicht zu hoch sein, da dann die Viskosität des Schlickers stark ansteigt. Bei keramischen Pulvern mit einer spezifischen Oberfläche von 1 bis 10 m²/g werden die nichtionischen Tenside bevorzugt in einer Menge von 0,1 bis 0,5 Gew.-% eingesetzt, bezogen auf das mit der hydrophoben Beschichtung versehene Pulver (keramisches Pulver und ggf. Sinterhilfsmittel).

Als Binder können wasserlösliche Binder, wie Polyvinylalkohol, Cellulosederivate oder polyestermodifizierte Polyurethanharze oder Polymerdispersionen auf Acrylat/Methacrylatbasis verwendet werden. Bevorzugt haben die Binder eine niedrige Lösungsviskosität und eine niedrige Feuchtigkeitsaufnahme, um ein gut lagerfähiges Granulat zu ergeben. Der Binder wird im allgemeinen in einer Menge zugegeben, daß der Bindergehalt 3 bis 5 Gew.-%, bezogen auf den Feststoffgehalt der Mischung, beträgt.

Zusätzlich zum Binder können als weitere Additive Preßhilfsmittel, z.B. Ölsäure, Polyethylenglykol oder Wachse, zugesetzt werden.

Die Erfindung wird an Hand der folgenden Beispiele näher erläutert.

### Beispiel 1

### Beschichtung

5 g (= 1 Gew.-%) Stearinsäure werden in 1 l Isopropanol gelöst. Dann wird eine Mischung aus 475 g AlN-Pulver (Teilchengröße 1,4 µm, BET 3,2 m²/g) und 25 g Y₂O₃ zugegeben und im Ultraschallbad 10 min homogenisiert. Anschließend wird das Lösungsmittel am Rotationsverdampfer abdestilliert. Das erhaltene beschichtete Pulver wird im Trockenschrank bei 110°C nachgetrocknet.

### Beispiel 2

### Beschichtung

Die in Beispiel 1 beschriebene Verfahrensweise wird wiederholt mit der Ausnahme, daß statt 1 Gew.-% 0,5 Gew.-% Stearinsäure eingesetzt werden.

### Beispiel 3

### Beschichtung

Die in Beispiel 1 beschriebene Verfahrensweise wird wiederholt mit der Ausnahme, daß statt 1 Gew.-% 5 Gew.-% Stearinsäure eingesetzt werden.

### Vergleichsbeispiel 1

### Beschichtung

Die in Beispiel 1 beschriebene Verfahrensweise wird wiederholt mit der Ausnahme, daß statt 1 Gew.-% 0,3 Gew.-% Stearinsäure verwendet wird.

### Beispiel 4

### Test auf Hydrolysebeständigkeit

10 g des in Vergleichsbeispiel 1 erhaltenen AlN/Y₂O₃-Pulvers mit einer Beschichtung von 0,3 Gew.-% werden intensiv in 100 ml Wasser gerührt. Nach 10 min ist ein zunehmender Geruch nach NH₃ festzustellen; das Pulver wird zunehmend zersetzt.

### Beispiel 5

### Test auf Hydrolysebeständigkeit

10 g der in den Beispielen 1 bis 3 erhaltenen AlN/Y₂O₃-Pulver mit einer Beschichtung von 0,5, 1,0 bzw. 5 Gew.-% Stearinsäure werden jeweils intensiv in 100 ml Wasser gerührt. Nach 20 min ist kein NH₃ Geruch festzustellen. Alle drei Pulver lassen sich nicht mit Wasser benetzen.

### Beispiel 6

### Schlickeraufbereitung

In 300 ml Wasser werden 0,54 g (=0,3 Gew.-%) Tributylphenolpolyglykolether mit einem HLB-Wert von 12 (Sapogenat® T 100, Hersteller Hoechst AG) und 1 kg Mahlkörper in einer Kugelmühle vorgemischt. Dann werden 180 g des in Beispiel 1 erhaltenen AlN/Y₂O₃-Pulvers mit einer Beschichtung von 1 Gew.-% Stearinsäure zugegeben und der Inhalt 20 min gemischt. Es wird ein stabiler Schlicker mit einer niedrigen Viskosität von 6 mPa·s, gemessen mit einem Rotationsviskosimeter der Firma Haake, erhalten.

### Vergleichsbeispiel 2

### Schlickeraufbereitung

Wie in Beispiel 6 beschrieben, wird ein Schlicker mit dem in Beispiel 1 erhaltenen beschichteten AlN/Y₂O₃-Pulver hergestellt, wobei jedoch nur 0,05 Gew.-% des Tributylphenolpolyglykolethers mit einem HLB-Wert von 12 (Sapogenat® T 100) eingesetzt werden. Der erhaltene Schlicker ist inhomogen; das Pulver ist nicht ausreichend benetzt.

### Vergleichsbeispiel 3

### Schlickeraufbereitung

Wie in Beispiel 6 beschrieben, wird ein Schlicker mit dem in Beispiel 1 erhaltenen beschichteten AlN/Y₂O₃-Pulver hergestellt, wobei jedoch 0,3 Gew.-% Tributylphenolpolyglykolether mit einem HLB-Wert von 8 (Sapogenat® T 040, Hersteller Hoechst AG) eingesetzt werden. Der erhaltene Schlicker ist inhomogen; das Pulver wird nicht ausreichend benetzt.

### Vergleichsbeispiel 4

### Schlickeraufbereitung

Wie in Beispiel 6 beschrieben, wird ein Schlicker mit dem in Beispiel 1 erhaltenen beschichteten AlN/Y₂O₃-Pulver hergestellt, wobei jedoch 0,3 Gew.-% Tributylphenolpolyglykolether mit einem HLB-Wert von 16 (Sapogenat® T 180, Hersteller Hoechst AG) eingesetzt werden. Es wird ein inhomogener Schlicker erhalten; das Pulver wird nicht ausreichend benetzt.

### Beispiel 7

### Herstellung eines Formkörpers

200 g des in Beispiel 1 erhaltenen AlN/Y₂O₃-Pulvers mit einer Beschichtung von 1 Gew.-% Stearinsäure, 1,2 g Tributylphenolpolyglykolether mit einem HLB-Wert von 12 (Sapogenat® T 100, Hersteller Hoechst AG) und 4,4 g eines polyestermodifizierten Polyurethanharzes (Daotan® VTW 1226, Hersteller Hoechst AG), das in Form von 10,9 g einer 40 %igen wäßrigen Lösung zugegeben wird, werden in insgesamt 134 g Wasser in einer Kugelmühle mit Mahlkörpern gemischt, bis ein homogener Schlicker erhalten wird.

Der Schlicker wird in einem Sprühtrockner zu einem granulierten Pulver (d₅₀ - 70 µm) verarbeitet. 5 g des granulierten Pulvers werden in eine Preßform gefüllt und mit einem Druck von 1000 bar zu einem tablettenförmigen Grünkörper verpreßt. Der Grünkörper wird anschließend bei 1840°C drei Stunden lang in einer Stickstoffatmosphäre gesintert. Der erhaltene Formkörper hat eine Wärmeleitfähigkeit von 160 W/mK.

## Patentansprüche

1. Verfahren zur Aufbereitung von wasserempfindlichen keramischen Pulvern zu einem rieselfähigen granulierten Pulver, bei dem das wasserempfindliche keramische Pulver mit einer hydrophoben Beschichtung versehen wird, bei dem das mit einer hydrophoben Beschichtung versehene Pulver in Wasser unter Zusatz eines nichtionischen Tensids aus der Gruppe der Alkylphenolpolyglykolether oder Fettsäurepolyglykolester mit einem HLB-Wert von 10 bis 14 in einer für eine monomolekulare Belegung des Pulvers ausreichenden Menge zusammen mit einem Binder dispergiert wird und durch Sprühtrocknung in ein rieselfähiges granuliertes Pulver überführt wird.

2. Verfahren nach Anspruch 1, dadurch gekennzeichnet, daß als nichtoxidisches keramisches Pulver Aluminiumnitrid-Pulver eingesetzt wird.

3. Verfahren nach Anspruch 1 oder 2, dadurch gekennzeichnet, daß das nichtoxidische keramische Pulver zusammen mit einem Sinterhilfsmittel mit einer hydrophoben Beschichtung versehen wird.

4. Verfahren nach Anspruch 3, dadurch gekennzeichnet, daß als Sinterhilfsmittel Yttriumoxid verwendet wird.

5. Verfahren nach einem der Ansprüche 1 bis 4, dadurch gekennzeichnet, daß das zugesetzte nichtionische Tensid einen HLB-Wert von 12 bis 13 aufweist.

6. Verfahren nach einem der Ansprüche 1 bis 5, dadurch gekennzeichnet, daß als nichtionische Tensid Trlbutylphenolpolyglykolether verwendet wird.

7. Verfahren nach einem der Ansprüche 1 bis 6, dadurch gekennzeichnet, daß das nichtionische Tensid in einer Menge von 0,1 bis 0,5 Gew.-%, bezogen auf das mit der hydrophoben Beschichtung versehene Pulver, eingesetzt wird.

8. Verfahren nach einem der Ansprüche 1 bis 7, dadurch gekennzeichnet, daß zur hydrophoben Beschichtung eine Fettsäure mit 10 bis 26 Kohlenstoffatomen, vorzugsweise Stearinsäure oder Palmitinsäure, verwendet wird.

9. Verfahren nach einem der Ansprüche 1 bis 8, dadurch gekennzeichnet, daß 0,5 bis 5 Gew.-% des zur hydrophoben Beschichtung verwendeten Stoffes, bezogen auf das zu beschichtende Pulver, eingesetzt werden.

## Claims

1. A process for converting water-sensitive ceramic powders into a free-flowing granulated powder, in which the water-sensitive ceramic powder is provided with a hydrophobic coating, in which the powder provided with a hydrophobic coating is dispersed together with a binder in water with addition of a nonionic surfactant from the group comprising alkylphenol polyglycol ethers or fatty acid polyglycol esters with an HLB value of from 10 to 14 in an amount sufficient to give a monomolecular layer on the powder, and is converted into a free-flowing granulated powder by spray drying.

2. The process as claimed in claim 1, wherein the nonoxide ceramic powder used is aluminum nitride powder.

3. The process as claimed in claim 1 or 2, wherein the nonoxide ceramic powder, together with a sintering aid, is provided with a hydrophobic coating.

4. The process as claimed in claim 3, wherein the sintering aid used is yttrium oxide.

5. The process as claimed in one of claims 1 to 4, wherein the nonionic surfactant added has an HLB value of from 12 to 13.

6. The process as claimed in one of claims 1 to 5, wherein the nonionic surfactant used is tributylphenol polyglycol ether.

7. The process as claimed in one of claims 1 to 6, wherein the nonionic surfactant is used in an amount of from 0.1 to 0.5 % by weight, based on the powder provided with the hydrophobic coating.

8. The process as claimed in one of claims 1 to 7, wherein the hydrophobic coating used is a fatty acid with from 10 to 26 carbon atoms, preferably stearic acid or palmitic acid.

9. The process as claimed in one of claims 1 to 8, wherein the material used for the hydrophobic coating is used in an amount of from 0.5 to 5 % by weight, based on the powder to be coated.

## Revendications

1. Procédé de transformation de poudres céramiques sensibles à l'eau en une poudre granulée s'écoulant librement dans lequel on munit la poudre céramique sensible à l'eau d'un revêtement hydrophobe, selon lequel on disperse la poudre munie du revêtement hydrophobe avec un liant dans de l'eau en ajoutant un agent tensioactif non ionique du groupe des éthers polyglycoliques d'alkylphénols ou des esters polyglycoliques d'acides gras, ayant un indice HLB de 10 à 14, en une quantité suffisante pour la formation d'une couche monomoléculaire sur la poudre, et on la transforme en une poudre granulée s'écoulant librement par séchage par pulvérisation;

2. Procédé selon la revendication 1, caractérisé en ce que l'on utilise comme poudre céramique non oxydique une poudre de nitrure d'aluminium.

3. Procédé selon la revendication 1 ou 2, caractérisé en ce que l'on munit d'un revêtement hydrophobe la poudre céramique non oxydique en même temps qu'un auxiliaire de frittage.

4. Procédé selon la revendication 3, caractérisé en ce que l'on utilise de l'oxyde d'yttrium comme auxiliaire de frittage.

5. Procédé selon l'une des revendications 1 à 4, caractérisé en ce que l'agent tensioactif non ionique ajouté a un indice HLB de 12 à 13.

6. Procédé selon l'une des revendications 1 à 5, caractérisé en ce que l'on utilise comme agent tensioactif non ionique un éther polyglycolique de tributylphénol.

7. Procédé selon l'une des revendications 1 à 6, caractérisé en ce que l'on utilise l'agent tensioactif non ionique en une quantité de 0,1 à 0,5 % en masse par rapport à la poudre munie du revêtement hydrophobe.

8. Procédé selon l'une des revendications 1 à 7, caractérisé en ce que l'on utilise pour le revêtement hydrophobe un acide gras de 10 à 26 atomes de carbone, de préférence l'acide stéarique ou l'acide palmitique.

9. Procédé selon l'une des revendications 1 à 8, caractérisé en ce que l'on introduit 0,5 à 5 % en masse de substance utilisée pour le revêtement hydrophobe, par rapport à la poudre à revêtir.
